# EUROPEAN PATENT SPECIFICATION

(11) **EP 2 328 732 B1**
(45) Date of publication and mention of the grant of the patent: **06.11.2013**
(21) Application number: 09806115.3
(22) Date of filing: 31.08.2009
(51) Int. Cl.: B29B 17/02

(54) **A PLANT FOR RECYCLING TIRES**
ANLAGE ZUR WIEDERVERWERTUNG VON REIFEN
USINE DE RECYCLAGE DE PNEUMATIQUE

(30) Priority: 29.08.2008 IT MI20081558
(43) Date of publication of application: 08.06.2011
(73) Proprietor: Greentech Innovation S.R.L., 20123 Milano (MI) (IT)
(72) Inventor: VERRI, Roberto, 20149 Milano (MI) (IT)
(74) Representative: Ciceri, Fabio
(86) International application number: PCT/IB2009/006676
(87) International publication number: WO 2010/023548

(56) References cited:
- EP-A2- 1 207 037
- WO-A1-92/15438
- DE-A1- 2 254 334
- JP-A- 2005 046 758

## Description

The present invention relates to a tire recycling plant, particularly but without limitation for recycling scrap tires, as defined in the preamble of claim 1.

Modem society mainly bases its economy and development on road transport. Thus, delivery of goods and services, implementation of industrial processes, as well as private or play activities rely on the use of cars, trucks, motorcycles, tractors, etc., which employ tires every day.

Tires are known to have a limited life and have to be replaced when they become useless. Unusable tires, such as excessively worn or damaged tires, are known as scrap tires.

As used herein, the term damaged tire is intended to indicate a punctured, cut, burst tire, or a tire having a loose tread (i.e. separated from the shoulders).

Scrap tires are a contaminating product, one tire, e.g. a car tire, taking 100 years to full disposal.

Considering that the scrap tires waiting for disposal every year can be counted in hundreds of thousands of tons, such scrap tires apparently create a major environmental concern.

Scrap tire recycling requires the scrap tire to be split into its main components, such as the textile, metal (typically steel) and rubber components.

A variety of solutions have been proposed for this purpose, but no scrap tire recycling attempt heretofore has reached environmentally compatible and/or cost-effective results.

Some of the mechanical scrap tire recycling plants known in the art can recover a more or less substantial portion of the rubber, but only partially address the problem of recovering the other components.

In recent times, plants have been introduced for scrap tire recycling which include a water-jet device capable of generating fluid jets, such as high pressure water jets, which allow separation of rubber from the other components, but these plants do not address the problem of recovery and recycling of the textile and metal components.

Particularly, it shall be noted that Water Jet disintegration of the tire is obtained by a high pressure fluid jet delivered by a nozzle moving along a predetermined path according to a special program; the nozzle is associated, for example, with a mechanical Cartesian arm.

Fluid pressurization is obtained using pressure boosting pumps which multiply pressure above 3000 bar.

PCT document n° WO 92/15438 published 17.09.1992 describes a method of reclaiming rubber from used tyres by using ultra high pressure fluid jets in order to remove the rubber from reinforced tread portions.

European application n° EP1207037A2 of "The Goodyear Tire & Rubber Company", is related to a method and apparatus for post-cure correction of tire uniformity defect.

DE Patent n° DE 2254334 of "Marangoni Meccanica S.p.A." describes a vulcanizing mould for pneumatic tyres.

In view of the above prior art, the object of the present invention is to provide a scrap tire recycling plant that has such structural and functional characteristics as to fulfill the above needs, while obviating the above prior art drawbacks.

This problem is solved by a scrap tire recycling plant as defined in claim 1.

The present invention provides a scrap tire recycling plant that allows simultaneous disintegration of multiple tires, thereby ensuring a considerably enhanced throughput, and hence considerable advantages in terms of cost effectiveness.

Finally, the present invention provides a scrap tire recycling plant that can obtain the following residual materials from tire disgregation:
- rubber crumb or granules, that can be sold in several different cuts,
- steel and
- nylon fibers.

Advantageously, the above plant can allow rubber granules, crumb or dust to be formed without touching the steel that forms the metal structure of the tire, thereby ensuring improved material recovery as compared with currently operating plants.

The characteristics and advantages of the invention will appear from the following detailed description of one practical embodiment, which is illustrated without limitation in the annexed drawings, in which:
- Figure 1 shows a basic scheme of the plant for recycling tires, particularly scrap tires using Water Jet technology, according to the present invention;
- Figure 2 is a cross sectional view of a workstation of the plant of Figure 1 during a tire disintegration step, according to the present invention.
- Figure 3 is another cross sectional view of the workstation of Figure 2 during another tire disintegration step, according to the present invention.
- Figure 4 is another cross sectional view of the workstation of Figure 2 during a step of collection of residual materials resulting from the disintegration steps as shown in Figures 2 and 3, according to the present invention.

While reference will be made hereinafter to scrap tires, the accessory, workstation and plant as disclosed herein are obviously indented to be capable of processing perfectly usable tires and not necessarily scrap tires, by Water Jet technology.

Bearing this in mind, and referring to the accompanying figures, numeral 1 generally designates a plant for recycling scrap tires using Water Jet technology.

The plant 1 comprises a plurality of workstations 2, 3, 4, 5, 6 and 7, which are designed to be controlled and operated by appropriate programmable control and operation means (not shown).

For instance, the programmable control and operation means consist of a PLC.

Therefore, the PLC can supervise and coordinate the operations to be accomplished by each workstation 2, 3, 4, 5, 6 and 7, as well as their interoperability to ensure proper operation of the recycling plant 1.

The first station 2 of the plant 1 may be an "intelligent" station in which one or more scrap tires 8 are selected and loaded into the second station 3.

Particularly, the first station 2 can select the scrap tires 8 by appropriate selection means, according to tread size, weight and thickness.

Once the scrap tires 8 have been sorted, scrap tires 8 with substantially the same diameters, weights and thicknesses are introduced into appropriate loaders 9.

These loaders transfer homogeneous scrap tires 8 to the second workstation 3.

It shall be noted that, once homogeneous scrap tires have been introduced into the loaders 9, the data collected during selection are transmitted to the second workstation 3 for best performance of the disintegration of scrap tires.

Such second workstation 3 is a station in which the scrap tires 8 are disintegrated and comprises:
- an accessory 10 and
- a Water Jet device 11 for disintegrating the rubber and fabric that form the scrap tire 8.

Particularly, the accessory 10 comprises a support 12 extending in a first preset direction X-X for supporting at least one tire 8 and possibly retaining means 13 extending in a second preset direction Y-Y transverse to said first preset direction X-X.

Particularly, the retaining means 13 cooperate with the support 12 to define a housing for at least one scrap tire 8.

It shall be noted that the retaining means 13 include a plurality of sectors 14, extending parallel to the second direction Y-Y, which are conformed to circumscribe the scrap tires 8 lying on the support 12.

Furthermore, it shall be noted that the accessory 10 comprises drive means15 that are operably associated with the plurality of sectors 14 to cause the plurality of sectors 14 to be reversibly displaced towards/away from a central portion of the support 12 to move between a first operating state C1 and a second operating state C2.

This leads to a corresponding expansion/contraction of the plurality of sectors 14 of the retaining means 13, allowing to retain scrap tires of different diameters.

In other words, when one or more scrap tires 8 lie on the support 12, the plurality of sectors 14 are controlled by the control and operation means, to assume a state intermediate between the first operating state C1 and the second operating state C2, such state being dependent on the radial size of said scrap tires 8 lying on the support itself.

Advantageously, the above feature allows retention of tires having different radial sizes, e.g. falling in a range from 600 to 1500 mm, without requiring any intervention for replacement of the retaining means 13 and affording a higher throughput of the plant 1 per time unit.

For each sector of said plurality of sectors 14 the drive means 15 have at least one actuator 20 mechanically connected to its respective sector 14 so that any movement of the actuator leads to a displacement between the first operating state C1 and the second operating state C2 of the plurality of sectors 14.

Furthermore, each actuator of the drive means 15 is mechanically connected via suitable mechanisms to a sector 14 and to the support 12.

According to a preferred aspect, the plurality of sectors 14 extend perpendicular to the first preset direction X-X, to create a retaining barrier or fence.

Preferably, the retaining barrier is as high as to be able to retain up to six concentric tires in the direction of extension.

It shall be noted that the sectors 14 of the accessory 10 are made of perforated sheet metal; its holes have such a size as to allow the passage of the residues (i.e. rubber crumbs, textile particles and fluid) obtained from disintegration of the tire 8.

Particularly, a size of such holes may fall in a range from 3 to 10 mm.

According to a preferred aspect of the present invention, the support 12 is provided as a support plate formed of one-piece grid of appropriate size (e.g. with a 100x50 mm mesh size) to allow the passage of residues (i.e. rubber crumbs, textile particles and fluid) obtained from disintegration of the tire 8.

It shall be noted that the accessory 10 further comprises a plurality of centering elements 16, extending parallel to each other in the second direction Y-Y to hold the scrap tires 8 in a preset position.

Particularly, these centering elements 16 are reversibly displaceable to and from the center of the support 12 thanks to appropriate drive means 17, to move between a third operating state C3 and a fourth operating state C4.

The centering elements 16 ensure that a predetermined distance always exists between one sector 14 and the tread of the tire 8, regardless of the type of tire 8 lying on the support 12.

In other words, the centering elements 16 are controlled by the control and operation means to take a preset position, according to the diameter of the scrap tires 8 to be processed.

For each centering element 16 the drive means 17 have at least one actuator mechanically connected to its respective centering element 16 so that any movement of the actuator 20 leads to a displacement between the third operating state C3 and the fourth operating state C4.

Furthermore, each actuator is mechanically connected via suitable mechanisms to a centering element 16 and to the support 12 respectively.

In a preferred embodiment, the centering elements 16 are in the form of rods having a cylindrical and/or parallelepipedal plan shape, oriented perpendicular to the support 10.

The accessory 5 further comprises motor means 18 operably connected with the support 12 for rotating the support.

It will be appreciated that the motor means 18 are protected by a casing 19 to ensure imperviousness to the fluid delivered by the Water Jet device 11 during disintegration of the scrap tires 8.

Thus, upon operation of the motor means 18, the support 12 and the scrap tires 8 thereon are rotated.

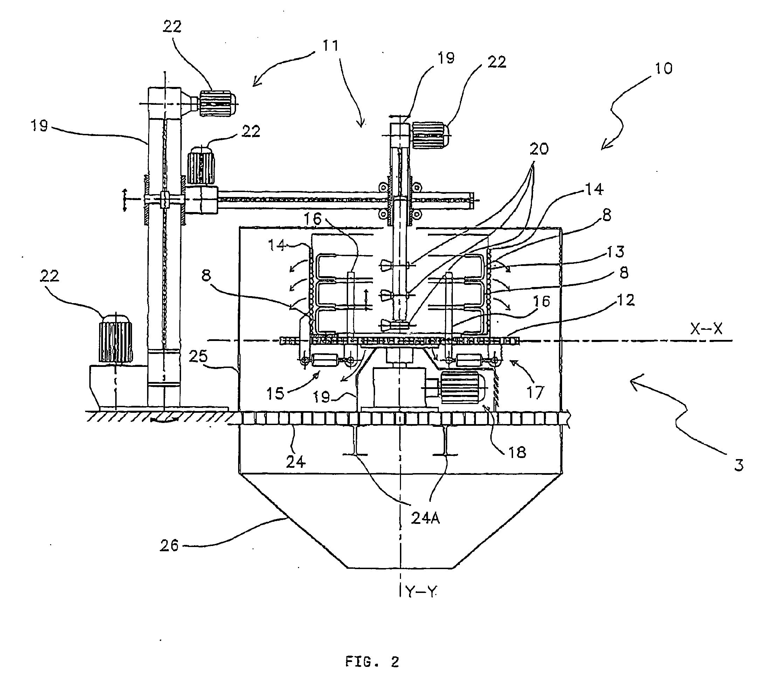

The second workstation 3, also with reference to Figure 2, comprises a Water-Jet device 11, which in turn has:
- swinging means 19, with at least one nozzle (or delivery head) associated therewith.

Such at least one nozzle 20 is capable of directing a high pressure flow of fluid, such as water, against at least one portion of the scrap tire 8.

Still referring to Figure 2, according to one aspect of the present invention, the delivered fluid flow is shown to have a propagation component substantially parallel to the direction of extension X-X of the support 12.

In other words, the nozzle 20 is oriented perpendicular to the tread and side surfaces of the scrap tire 8.

Preferably, the nozzles 20 associated with the swinging means 19 are as many as the scrap tires 8 lying on the support 12.

For example, three nozzles 20 are provided in the arrangement of Figure 2, because three scrap tires lie on the support 12 for simultaneous disintegration.

Particularly, in a preferred embodiment, the swinging means 19 include a pair of mechanical Cartesian arms, one extending in the direction Y-Y (i.e. vertically) and the other extending in the direction X-X (i.e. horizontally).

It shall be noted that the nozzle 20 is associated with the mechanical arm that extends in the direction X-X.

Also, it shall be noted that these two arms are controlled by appropriate motors 22, which are controlled by the control and operation means.

Particularly, these motors 22 allow the mechanical arms to impart translational movements in the first direction X-X and the second direction Y-Y and rotary movements about such second direction Y-Y.

Therefore, once the tires 8 (e.g. up to six tires) are laid on the support 12 of the accessory 10, the mechanical arm with the nozzles 20 moves to a predetermined operating position in which the nozzles 20 are at such a height from the support 12 and at such a distance from the walls of the sector 14 as to ensure optimal disintegration of the tires 8.

Still referring to Figure 2, it will be appreciated that the second workstation 3 also comprises a cover 25 associated with a hopper 26 capable of containing and collecting the disintegration residues as well as the fluids delivered by the Water Jet device 11.

Once the tread of the scrap tires 8 lying on the support 12 has been disintegrated, the second workstation 3 is designed to accomplish disintegration of the scrap tires 8.

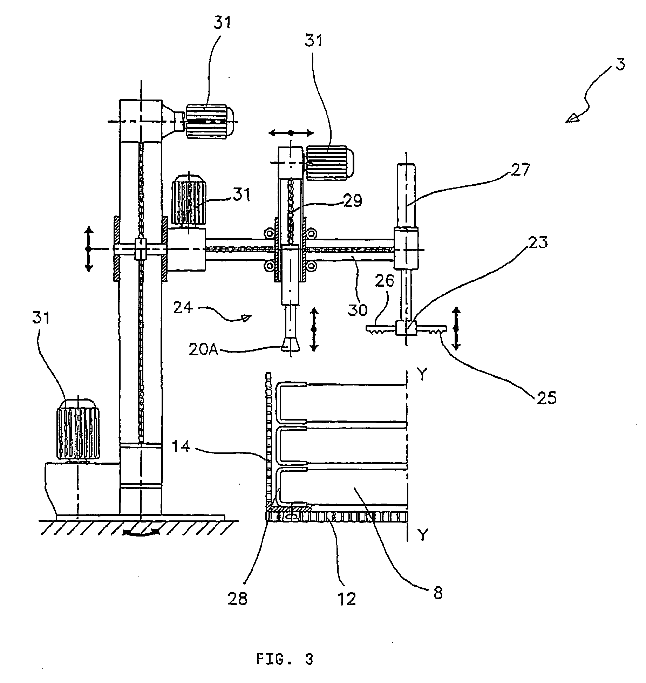

For this purpose, also referring to Figure 3, the second workstation 3 further comprises:
- presser means 23, for pressing the shoulders of the scrap tires 8 towards each other in the axial direction X-X, and
- an additional Water Jet device 24.

Advantageously, the presser means 23 include a pushing member 25 movable in the first direction X-X, preferably the axial direction.

The pushing member 25 is preferably situated at the distal end of a radial arm 26; the proximal end 15 of the radial arm 26 is advantageously secured to the lower end of a first vertical arm 27.

Advantageously, the lower end is movable in the axial direction X-X, whereas the radial arm 26 may be axially fixed relative to the lower end.

Advantageously, the presser means 23 include a plurality of, preferably three or four, radial arms 26, to exert a substantially radially balanced pressure upon the shoulders of the scrap tires 8.

Advantageously, the distal end of the radial arm 26 is movable in the radial direction, i.e. a direction perpendicular to the axial direction.

The distal ends 14 may be radially moved using the control and operation means, for the pushing members 25 to be disposed axially above the shoulders 28 of the scrap tires 8.

The second workstation 2 further comprises the additional a Water Jet device 24 for disintegrating the shoulders 28 of the scrap tires 8 lying on the support 12.

The Water-Jet device 24 is equipped with one or more nozzles 20A and is conveniently associated with second swinging means 29 which, in the preferred embodiment, consist of a second vertical arm 29.

It shall be noted that the one or more nozzles 20A are placed at the lower end and move in the axial direction Y-Y.

Therefore, the lower end 19 is movable in the axial direction X-X and is integral with the Water Jet device 24.

The first and second vertical arms 26, 29 are advantageously disposed on a second radial arm 30.

Advantageously, the second radial arm 30 is movable between a first operating state, in which it allows operation of the presser means 23 and the Water Jet device 24 on the scrap tires 8 loaded on the support 12, and a second state, in which such operation is not allowed.

Advantageously, the motion between the first and second states is a rotary motion about the second direction Y-Y, parallel to the direction X-X but spaced therefrom.

Advantageously, appropriate motor means 31 are provided to allow displacement of the arms 27, 29 and the second radial arm 30.

Once one or more, for example three scrap tires 8, have been loaded onto the support 12, concentrically with the axis Y-Y, and the Water-Jet device 11 has disintegrated substantially the whole tread of the scrap tires 8, then the presser means 23 move axially downwards and press together all the shoulders of the one or more scrap tires 8.

Upon contact of the shoulders, the Water-Jet device 24 operates to disintegrate the shoulders 28 of the scrap tires 8.

Namely, during disintegration of the treads, the presser means 23 are in the second state, to avoid any interference with the above operations.

In other words, the shoulders 28 of the scrap tires 8 are pressed together substantially to contact, thereby forming a substantially solid rubber ring.

Then, the Water-Jet device 24 is disposed at a proper radial distance axially above the shoulders 28 of the scrap tires 8, and is operated to disintegrate the shoulders by fluid delivery.

Once the above operations have been completed, the presser means 23 are moved back to the second state.

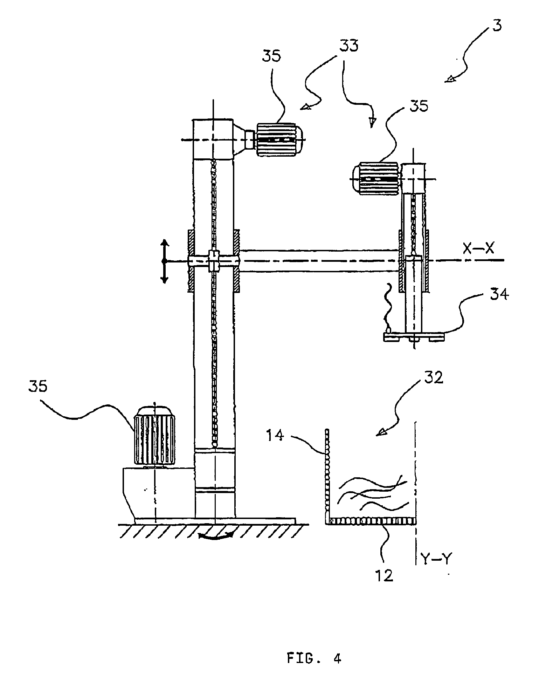

Now, the housing defined by the retaining means 13 and the support 12, also referring to Figure 4, only contains the metal part 32 of the disintegrated scrap tires 8, as the rubber powder and the fabric obtained from the disintegration that takes place in the second station 3 may be collected, with the fluid used by the Water-Jet devices 11 and 24, in a collection tank 33 that is part of the third workstation 6.

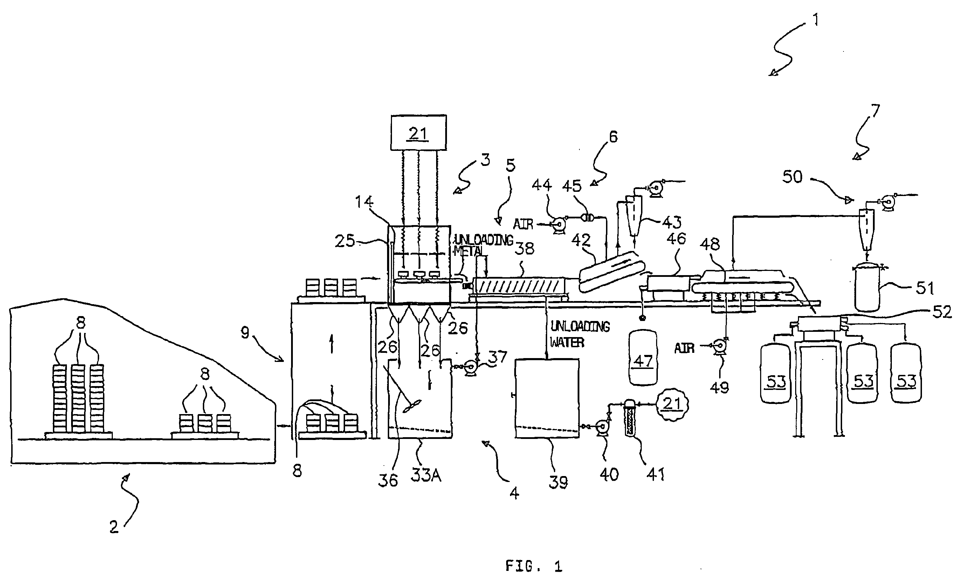

It shall be noted, also referring to Figure 1, that a storage and feeding station for the Water-Jet devices 11 and 24, generally designated by numeral 1, is provided in the plant 1, and particularly such storage station 21 has means for ensuring delivery of fluid at the proper rate and pressure to the nozzles 20, as well as generation of the power required for the motors to increase fluid pressure to the optimal values to perform disintegration.

Still referring to Figure 4, for recovery of the metal residue 32 (i.e. steel) of the disintegrated scrap tires 8, the second workstation 3 further has swinging means 33 with at least one magnetic clamping table 34 associated therewith for magnetically clamping said metal residues 32.

Particularly, in a preferred embodiment, the swinging means 33 include a pair of mechanical Cartesian arms, one extending in the direction Y-Y (i.e. vertically) and the other extending in the direction X-X (i.e. horizontally).

It shall be noted that the magnetic table 34 is associated with the mechanical arm that extends in the direction X-X.

Also, it shall be noted that these two arms are controlled by appropriate motors 35, which are controlled by the control and operation means.

Particularly, these motors 35 are electric motors that allow the mechanical arms to impart translational movements in the first direction X-X and the second direction Y-Y and rotary movements about such second direction Y-Y.

Therefore, the metal residues 32 on the support 12 are recovered by having the magnetic table 34 move, under the supervision of the control and operation means, close to such metal residues 32. Once it has moved close to the metal residues 32, the magnetic circuits in the magnetic table 34 are actuated to recover such residues by magnetic attraction, and carry them into a collection point of the plant 1.

It shall be noted that, in order to reach performances that can ensure greater cost effectiveness, the second workstation 3 of the plant, for disintegrating scrap tires 8, has a plurality of, such as six accessories 10.

Referring now to Figure 1, the powder granules and the textile particles are held in suspension within the tank 33A of the third workstation 4, in the fluid delivered by the Water-Jet device/s 11 and/or 24, using suitable stirring means 36.

The water-rubber crumbs suspension is conveyed to a centrifuge 38 that is part of the fourth workstation 5, to obtain wet crumbs with a very low moisture content.

The pump 37 is controlled according to the level of liquid in the tank 33A.

The fluid that comes out of the centrifuge 38 is collected in an additional collection tank 39, which has a minimum and maximum level control, for controlling an additional pump 40 for backflow of the fluid, once it has been filtered by appropriate filtering means 41 to the storage tank in the section 21.

A fifth workstation 6 receives rubber crumbs from the fourth workstation 5 and further dries such crumbs.

Particularly, the fifth workstation 6 consists of a conveyor belt 42 with a hood 43 thereon, the latter having electric air heating means 44 and blowers 45 for blowing said hot air onto the conveyor belt 42.

The presence of rubber crumbs on the conveyor belt 42 is detected, for instance, by suitable optical means.

Once the rubber crumbs have been dried, hot air is recovered by a fan and cyclone system.

Once the rubber crumbs have been dried on the conveyor belt 42, they are transmitted to a screening system 46 for grain size sorting, such screening system 46 being part of the sixth workstation 7 of the plant 1.

Particularly, the screening system 46 separates finer rubber crumbs from coarse ones.

Finer rubber crumbs are stored in a container 47.

Furthermore, the remaining rubber crumbs are transmitted to a vibrating table 48 which separates rubber crumbs from textile particles both by vibration and by the effect of air blow thereunder by a blower 49.

Thus, the textile part is removed by suction by a fan and cyclone system 50 and discharged into a special container 51.

The rubber crumbs are discharged from the vibrating table 48 into a screen 52 for grain size sorting thereof.

Particularly, the rubber crumbs are sorted into different containers 53 according to their grain size.

Therefore, this plant 1 provides an unprecedented material purity as well as a high yield per time unit.

In view of the above description and considering the different types of possible damages of a tire, particularly loose tread, a skilled person can easily appreciate that all the characteristics, features and advantages of the above plant may be maintained unaltered even when the plant is used for disintegration of portions of tires. These portions may be, for instance, shoulders obtained either from loose-tread tires or from specially separated scrap tires.

The same shall also apply to the teachings of Patent Applications MI2008A00A001559, PCT/IT2008/000561, PCT/IT2008/000562, MI2008A001560 and MI2008A001558.

Those skilled in the art will obviously appreciate that a number of changes and variants may be made to the arrangements as described hereinbefore to meet specific needs, without departure from the scope of the invention, as defined in the following claims.

## Claims

1. A plant (1) for recycling tires using Water Jet technology, comprising a first workstation (2) for selecting and loading at least one tire (8) into a second workstation (3), said second workstation (3) being adapted to disintegrate said tires (8) loaded therein, said second workstation (3) comprising:
- an accessory (10) having a support (12) extending in a first preset direction (X-X) for supporting at least one tire (8) and retaining means (13) extending in a second preset direction (Y-Y) transverse to said first preset direction (X-X), said retaining means (13) cooperating with said support (12) to define a housing for said at least one tire (8);
**characterized in that** said retaining means (13) comprise a plurality of sectors (14) extending parallel to said second direction (Y-Y), said plurality of sectors (14) being adapted to circumscribe said at least one tire (8) and first drive means (15) operably associated with said plurality of sectors (14) to cause said plurality of sectors to be reversibly displaced towards/away from a central portion of said support (12) to move between a first operating state (C1) and a second operating state (C2) and
- a first Water Jet device (11) being adapted to disintegrate said at least one tire (8) by delivering a high pressure fluid.

2. A tire recycling plant (1) as claimed in claim 1, wherein said accessory (10) comprises a plurality of centering elements (16) extending parallel to each other in said second direction (Y-Y) to hold said at least one tire (8) in a preset position and second drive means (17) operably associated with said plurality of centering elements (16) to cause said plurality of centering elements (16) to be reversibly displaced towards/away from said central portion of said support (12) to move between a third operating state (C3) and a fourth operating state (C4).

3. A tire recycling plant (1) as claimed in claim 1 or 2, wherein said Water Jet device (11) comprises swinging means (19) with at least one nozzle (20) associated therewith for directing said high pressure fluid flow against at least one portion of a tire (8).

4. A tire recycling plant (1) as claimed in claim 3, wherein said swinging means (19) include a first pair of mechanical Cartesian arms capable of translation and/or rotation in said first (X-X) and said second (Y-Y) directions.

5. A tire recycling plant (1) as claimed in claim 1, comprising presser means (23) for pressing said shoulders (102) of said tire (8) towards each other in said second direction of extension (Y-Y), said presser means (23) including a pushing member (25) movable in said second direction of extension (Y-Y).

6. A tire recycling plant (1) as claimed in claim 5, comprising a second Water Jet device (24) which has second swinging means (29) with at least one nozzle (20A) associated therewith for directing said high pressure fluid flow against said shoulders (28) of said tire (8).

7. A tire recycling plant (1) as claimed in claim 6, wherein said second swinging means (29) comprise an arm extending in said second direction (Y-Y) and movable in said second direction (Y-Y) with which said nozzle (20A) is associated.

8. A tire recycling plant (1) as claimed in claim 1, comprising third swinging means (33) with at least one magnetic clamping table (34) associated therewith for magnetically clamping the metal residues (32) of said at least one tire (8).

9. A tire recycling plant (1) as claimed in claim 8, wherein said swinging means (33) include a second pair of mechanical Cartesian arms, one extending in the second direction of extension (Y-Y) and the other extending in the first direction of extension (X-X).

10. A tire recycling plant (1) as claimed in claim 1 or 6, comprising a third workstation (6) for collecting the rubber and textile particles disintegrated in said second disintegration workstation (3) as well as the fluid delivered by said first Water Jet device (11) and/or said second Water Jet device (24), said third workstation (4) being adapted to hold the rubber and textile particles in suspension in the fluid delivered by said first Water Jet device (11) and/or said second Water Jet device (24), using suitable stirring means (36).

11. A tire recycling plant (1) as claimed in claim 10, comprising a fourth workstation (5) for receiving the wet rubber crumbs from said third workstation (4) and centrifuging said wet rubber crumbs to obtain rubber crumbs with a very low moisture content.

12. A tire recycling plant (1) as claimed in claim 11, comprising a fifth workstation (6) for receiving the rubber crumbs from the fourth station (5) and further drying said rubber crumbs.

13. A tire recycling plant (1) as claimed in claim 12, comprising a sixth workstation (7) for receiving the rubber crumbs from the fifth station (6) and separating said rubber crumbs according to their size.

## Patentansprüche

1. Anlage (1) zur Wiederverwertung von Reifen unter Benutzung von Wasserstrahltechnologie, umfassend eine erste Arbeitsstation (2) zum Auswählen und Laden von zumindest einem Reifen (8) in eine zweite Arbeitsstation (3), wobei die zweite Arbeitsstation (3) dazu geeignet ist, die darin geladenen Reifen (8) zu zerstückeln, die zweite Arbeitsstation (3) umfassend:
- ein Zubehör (10) mit einer Stütze (12), die in einer ersten vorgegebenen Richtung (X-X) zum Stützen von zumindest einem Reifen (8) verläuft, und Haltemitteln (13), die in einer zweiten vorgegebenen Richtung (Y-Y), quer zur ersten vorgegebenen Richtung (X-X) verlaufen, wobei die Haltemittel (13) mit der Stütze (12) zum Definieren eines Gehäuses für den zumindest einen Reifen (8) zusammenwirken;
**dadurch gekennzeichnet, dass** die Haltemittel (13) mehrere Sektoren (14) , die parallel zur zweiten Richtung (Y-Y) verlaufen, wobei die mehreren Sektoren (14) dazu geeignet sind, den zumindest einen Reifen (8) zu begrenzen, und erste Antriebsmittel (15) umfassen, die den mehreren Sektoren (14) betriebsfähig zugeordnet sind, um zu bewirken, dass die mehreren Sektoren umkehrbar zu einem mittleren Abschnitt der Stütze (12) hin oder davon weg verschoben werden, um sich zwischen einem ersten Betriebszustand (C1) und einem zweiten Betriebszustand (C2) zu bewegen, und
- eine erste Wasserstrahlvorrichtung (11), die dazu geeignet ist, den zumindest einen Reifen (8) durch Abgeben eines Hochdruckfluids zu zerstückeln.

2. Reifenwiederverwertungsanlage (1) nach Anspruch 1, wobei das Zubehör (10) mehrere Zentrierelemente (16), die parallel zueinander in der zweiten Richtung (Y-Y) zum Halten des zumindest einen Reifens (8) in einer vorgegebenen Position verlaufen, und zweite Antriebsmittel (17) umfasst, die den mehreren Zentrierelementen (16) betriebsfähig zugeordnet sind, um zu bewirken, dass die mehreren Zentrierelemente (16) umkehrbar zu dem mittleren Abschnitt der Stütze (12) hin oder davon weg verschoben werden, um sich zwischen einem dritten Betriebszustand (C3) und einem vierten Betriebszustand (C4) zu bewegen.

3. Reifenwiederverwertungsanlage (1) nach einem der Ansprüche 1 oder 2, wobei die Wasserstrahlvorrichtung (11) Schwingmittel (19) mit zumindest einer Düse (20) umfasst, die diesen zum Lenken des Hochdruckfluids an zumindest einen Abschnitt eines Reifens (8) zugeordnet ist.

4. Reifenwiederverwertungsanlage (1) nach Anspruch 3, wobei die Schwingmittel (19) ein erstes Paar kartesischer Arme enthalten, die zur Translation und/oder Rotation in der ersten (X-X) und der zweiten Richtung (Y-Y) imstande sind.

5. Reifenwiederverwertungsanlage (1) nach Anspruch 1, umfassend Pressmittel (23) zum Pressen der Flanken (102) des Reifens (8) in der zweiten Verlaufsrichtung (Y-Y) zueinander hin, wobei die Pressmittel (23) ein Schiebeglied (25) enthalten, das in der zweiten Verlaufsrichtung (Y-Y) beweglich ist.

6. Reifenwiederverwertungsanlage (1) nach Anspruch 5, umfassend eine zweite Wasserstrahlvorrichtung (24), die zweite Schwingmittel (29) mit zumindest einer Düse (20A) umfasst, die diesen zum Lenken des Hochdruckfluids an die Flanken (28) des Reifens (8) zugeordnet ist.

7. Reifenwiederverwertungsanlage (1) nach Anspruch 6, wobei die zweiten Schwingmittel (29) einen Arm umfassen, der in der zweiten Richtung (Y-Y) verläuft und in der zweiten Richtung (Y-Y) beweglich ist, und dem die Düse (20A) zugeordnet ist.

8. Reifenwiederverwertungsanlage (1) nach Anspruch 1, umfassend dritte Schwingmittel (33) mit zumindest einem magnetischen Einspanntisch (34), der diesen zum magnetischen Einspannen der Metallrückstände (32) des zumindest einen Reifens (8) zugeordnet ist.

9. Reifenwiederverwertungsanlage (1) nach Anspruch 8, wobei die Schwingmittel (33) ein zweites Paar kartesischer Arme umfassen, von denen einer in der zweiten Verlaufsrichtung (Y-Y) verläuft und der andere in der ersten Verlaufsrichtung (X-X) verläuft.

10. Reifenwiederverwertungsanlage (1) nach einem der Ansprüche 1 oder 6, umfassend eine dritte Arbeitsstation (6) zum Auffangen der Kautschuk- und Textilpartikeln, die in der zweiten Arbeitsstation (3) zerstückelt wurden, sowie des Fluids, das von der ersten Wasserstrahlvorrichtung (11) und/oder der zweiten Wasserstrahlvorrichtung (24) abgegeben wurde, wobei die dritte Arbeitsstation (4) dazu geeignet ist, die Kautschuk- und Textilpartikeln unter Benutzung geeigneter Rührmittel (36) in dem Fluid, das von der ersten Wasserstrahlvorrichtung (11) und/oder der zweiten Wasserstrahlvorrichtung (24) abgegeben wurde, in Suspension zu halten.

11. Reifenwiederverwertungsanlage (1) nach Anspruch 10, umfassend eine vierte Arbeitsstation (5) zum Aufnehmen der nassen Kautschukkrümel aus der dritten Arbeitsstation (4) und zum Zentrifugieren der nassen Kautschukkrümel zum Erhalten von Kautschukkrümeln mit einem sehr niedrigen Feuchtigkeitsgehalt.

12. Reifenwiederverwertungsanlage (1) nach Anspruch 11, umfassend eine fünfte Arbeitsstation (6) zum Aufnehmen der Kautschukkrümel aus der vierten Arbeitsstation (5) und zum weiteren Trocknen der Kautschukkrümel.

13. Reifenwiederverwertungsanlage (1) nach Anspruch 12, umfassend eine sechste Arbeitsstation (7) zum Aufnehmen der Kautschukkrümel aus der fünften Station (6) und zum Trennen der Kautschukkrümel gemäß ihrer Größe.

## Revendications

1. Installation pour le recyclage de pneus (1) à l'aide de la technologie Water Jet (du jet d'eau), comprenant un premier poste de travail (2) pour la sélection et le chargement d'au moins un pneu (8) sur un deuxième poste de travail (3), ledit second poste de travail (3) étant adapté pour désintégrer lesdits pneus (8) qui y sont chargés, ledit second poste de travail (3), comprenant :
- un accessoire (10) comportant un support (12) s'étendant dans une première direction prédéfinie (X-X) pour supporter au moins un pneu (8) et des moyens de fixation (13) s'étendant dans une deuxième direction prédéterminée (Y-Y) transversale à ladite première direction prédéfinie (X-X), lesdits moyens de fixation (13) coopérant avec ledit support (12) pour définir un logement pour ledit au moins un pneu (8) ;
**caractérisé en ce que** lesdits moyens de fixation (13) comprennent une pluralité de secteurs (14) s'étendant parallèlement à ladite deuxième direction (Y-Y), ladite pluralité de secteurs (14) étant adaptée pour circonscrire ledit au moins un pneu (8) et des premiers moyens d'entraînement (15) associés de manière fonctionnelle à ladite pluralité de secteurs (14) pour provoquer le déplacement de ladite pluralité de secteurs de manière réversible vers / à partir d'une partie centrale dudit support (12) afin de passer d'un premier état de fonctionnement (C1) à une seconde état de fonctionnement (C2), vice-versa, et
- un premier dispositif à jet d'eau (11) adapté pour désintégrer ledit au moins un des pneus (8) en distribuant un fluide à haute pression.

2. Installation pour le recyclage de pneus (1) selon la revendication 1, où ledit accessoire (10) comprend une pluralité d'éléments de centrage (16) s'étendant parallèlement les uns par rapport aux autres dans ladite deuxième direction (Y-Y) pour maintenir ledit au moins un pneu (8) dans une position prédéfinie et un second moyen d'entraînement (17) associé de manière fonctionnelle à ladite pluralité d'éléments de centrage (16) pour entraîner le déplacement de ladite pluralité d'éléments de centrage (16) de manière réversible vers / depuis ladite partie centrale dudit support (12) pour passer d'un troisième état de fonctionnement (C3) vers un quatrième état de fonctionnement (C4), et vice-versa.

3. Installation pour le recyclage de pneus (1) selon la revendication 1 ou 2, où ledit dispositif à jet d'eau (11) comprend un procédé de pivotement (19) avec au moins une buse (20) qui lui est associée pour diriger ledit écoulement de fluide à pression élevée contre au moins une partie d'un pneu (8).

4. Installation pour le recyclage de pneus (1) selon la revendication 3, où ledit procédé de pivotement (19) inclut une première paire de bras cartésiens mécaniques capables de translation et/ou de rotation dans lesdites première direction (X-X) et deuxième direction (Y-Y).

5. Installation pour le recyclage de pneus (1) selon la revendication 1, comprenant des procédés de pression (23) pour presser lesdits épaulements (102) dudit pneu (8) les uns vers les autres dans ladite deuxième direction d'extension (Y-Y), ledit procédé de pression (23) comprenant un élément de poussée (25) mobile dans ladite deuxième direction d'extension (Y-Y).

6. Installation pour le recyclage de pneus (1) selon la revendication 5, comprenant un second dispositif à jet d'eau (24) possédant un second procédé de pivotement (29) avec au moins une buse (20A) qui lui est associée pour diriger ledit écoulement de fluide à pression élevée contre les au moins dits épaulements (28) dudit pneu (8).

7. Installation pour le recyclage de pneus (1) selon la revendication 6, où ledit second procédé de pivotement (29) possède un bras s'étendant dans ladite deuxième direction d'extension (Y-Y) et mobile dans ladite deuxième direction d'extension (Y-Y) avec laquelle la buse (20A) est associée.

8. Installation pour le recyclage de pneus (1) selon la revendication 1 comprenant un troisième procédé de pivotement (33) avec au moins une table de bridage magnétique (34) qui lui est associée pour brider magnétiquement les résidus métalliques (32) dudit au moins un pneu (8).

9. Installation pour le recyclage de pneus (1) selon la revendication 8 où ledit procédé de pivotement (33) inclut une deuxième paire de bras cartésiens mécaniques, l'un s'étendant dans la deuxième direction d'extension (Y-Y) et l'autre s'étendant dans la première direction d'extension (X-X).

10. Installation pour le recyclage de pneus (1) selon la revendication 1 ou 6, comprenant un troisième poste de travail (6) pour collecter le caoutchouc et les particules de textiles désintégrés dans ledit deuxième poste de travail de désintégration (3), ainsi que le fluide distribué par ledit premier dispositif à jet d'eau (11) et / ou ledit second dispositif à jet d'eau (24), ledit troisième poste de travail (4) étant adapté pour maintenir les particules de caoutchouc et de textile en suspension dans le fluide distribué par ledit premier dispositif à jet d'eau (11) et/ou ledit second dispositif à jet d'eau (24), à l'aide de procédés d'agitation appropriés (36).

11. Installation pour le recyclage de pneus (1) selon la revendication 10 comprenant un quatrième poste de travail (5) pour recevoir les morceaux de caoutchouc humide dudit troisième poste de travail (4) et centrifuger lesdits morceaux de caoutchouc humide pour obtenir des morceaux de caoutchouc avec une très faible teneur en humidité.

12. Installation pour le recyclage de pneus (1) selon la revendication 11, comprenant un cinquième poste de travail (6) pour recevoir les morceaux de caoutchouc du quatrième poste de travail (5) et les sécher ensuite.

13. Installation pour le recyclage de pneus (1) selon la revendication 12, comprenant un sixième poste de travail (7) pour recevoir les morceaux de caoutchouc du cinquième poste de travail (6) et séparer lesdits morceaux de caoutchouc selon leur taille.
